# EUROPEAN PATENT SPECIFICATION

(11) **EP 0 898 862 B1**
(45) Date of publication and mention of the grant of the patent: **08.01.2003**
(21) Application number: 98660080.7
(22) Date of filing: 24.08.1998
(51) Int. Cl.: A01C 7/08

(54) **A method and a device for providing the sprouting stimulation required by seeds**
Verfahren und Vorrichtung zur Steigerung von Samenkeimen
Procédé et appareil pour la stimulation à la germination des sémences

(30) Priority: 22.08.1997 FI 973479
(43) Date of publication of application: 03.03.1999
(73) Proprietor: Oy Juko Ltd., 23100 Mynämäki (FI)
(72) Inventor: Äikiä, Raimo, 11100 Hämeenlinna (FI); Rauhala, Olli, 21270 Nousiainen (FI); Väättänen, Anssi, 23450 Lokalahti (FI)
(74) Representative: Hiltunen, Pentti Juhani

(56) References cited:
- DE-A- 3 644 767
- NL-A- 7 707 859
- US-A- 3 154 031
- US-A- 3 351 031
- US-A- 3 653 550
- US-A- 4 409 910

## Description

The object of the invention is a method and a device, with which water is directed to secure the sprouting stimulation of seeds in connection with sowing.

The known methods for spreading fertilisers in a field are divided into two main groups, i.e. surface fertilisation where the fertiliser is spread over the surface of the field, and placing fertilisation where the fertiliser is directed under the earth surface with the aid of a colter. In the last mentioned group the most common method is the sowing fertilisation where fertiliser spreading and sowing is done in the same run. With the aid of seed colters the seeds are sown in rows, and likewise a granular fertiliser is placed with the aid of fertiliser colters between these seed rows, usually between every second seed row.

The fertiliser rows must be at a certain distance from the seed rows in order to keep the seeds from being damaged due to the high salinity caused by the fertiliser. This again results in that the sprouting seeds, which have short rootlets not reaching the fertiliser row, may suffer from lack of nutriment. In order to solve this problem the Swedish patent no. 871968-3 presents a method and a device used in sowing fertilisation in which a small proportion of the granular fertiliser is directed to seed tubes and from there further to the seed rows, and the rest, i.e. the main proportion of the fertiliser is directed to the fertiliser furrows made by the fertiliser colters. This arrangement secures the supply of nutrients to the plant in the first phases of the growth without damaging the plant.

However, certain shortcomings are still connected to the above described technique. If the earth is suitably light during sowing it is possible that the earth moisture is not sufficient for a rapid and even sprouting of the seeds, but the sprouting is initialised only after a rain. If the sprouting is late the effective growing period is correspondingly shortened. An uneven sprouting results in an uneven maturation, whereby there will be much green corns in the grain crop. A late sprouting also adds a risk that a considerable amount of fertilisers will flow off the field in case of a heavy rain. This causes disadvantages regarding both production economy and environment protection.

The purpose of this invention is to provide a method and a device with the aid of which the above mentioned problems are avoided.

The purpose of the invention is particularly to provide the sprouting stimulation required by seeds.

Another purpose of the invention is to dispense the sprouting fertilisation required by the seeds in a form which can be utilised immediately.

A further purpose is to secure that the moisture dispensed over the seeds is held close to the seeds for a long time.

The characteristics of the invention are disclosed in the claims.

With the method according to the invention water or an aqueous compound is directed to the seeds in connection with the seeds being sown into a furrow opened by a seed colter.

According to a suitable embodiment the guidance of water or an aqueous compound to the seeds is made by spraying, advantageously by pressure spraying from nozzles mounted at the seed colters. Then the sprayed water or aqueous compound meets the seeds only when they have already left the seed tube, whereby the sprayed substance can not cause any blocking or like problems.

The concept of an "aqueous compound" means solutions or suspensions where one or more substances, for instance a nutriment and/or a substance causing congealing (gelatination), is dissolved and/or suspended in water. As examples of such an aqueous compound we can mention
- a nutrient compound, such as a urine solution, or a suspension of a sludge-like dung or a solid fertiliser, where a part is possibly dissolved,
- the above mentioned nutrient compound, to which is added a gelatinating substance which has caused or will cause congealing, and
- pure water, to which is added a gelatinating substance which has caused or will cause congealing.

The concept of a "gel" means in this connection any congealed form which is able to absorb moisture and retard the exit of the moisture. The concept of a "gelatinating substance" means any substance with the aid of which said gel can be made.

The gelatinating substance is suitably a polymer-based substance, such as the commercial retention substances, gelatine (a polypeptide) or a polysaccharide.

According to a suitable example by the sowing of grains the dispensed amount of water is a few decilitres, for instance 1 to 2 decilitres water per square metre arable land.

According to a preferable embodiment a gelatinating substance is added to the aqueous compound, which substance has formed a gel already at the dispensing moment, or which immediately after a seed has fallen to the ground will form a gel at the temperature prevailing in the seed furrow. The gel which was formed is able to retain a large amount of water for a long time, and thus it is able to secure the sprouting of the seed and to prevent the earth surrounding the seed from hardening as a result of desiccation.

According to a suitable embodiment the aqueous compound is in the form of a gel already when it is dispensed. The form of the gel will suitable vary between a soup and a fool. If a retention substance is used as the gelatinating substance the suitable dosage is about 2 kg substance per cubic metre of water.

The water or the aqueous suspension is suitable dispensed by pressure spraying, whereby the pressure is about 5 to 15 bar.

The invention is described below in more detail with reference to the enclosed drawings, in which
Figure 1 shows the principle of the sowing fertilisation known per se,
Figure 2 shows a prior art sowing fertilising machine which is provided with an accessory, with which a small amount of fertiliser is dispensed into the seed rows,
Figure 3 shows a sowing fertilising machine provided with an accessory according to the invention, and
Figure 4 shows a detail of figure 3.

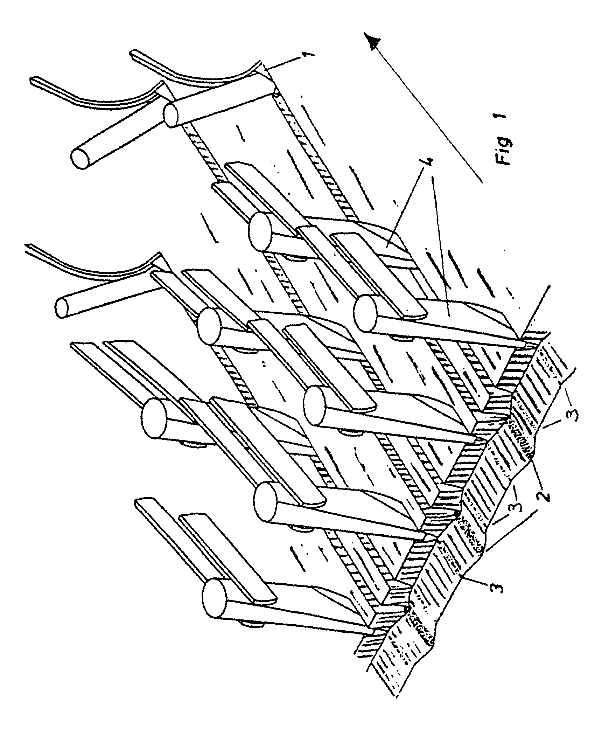

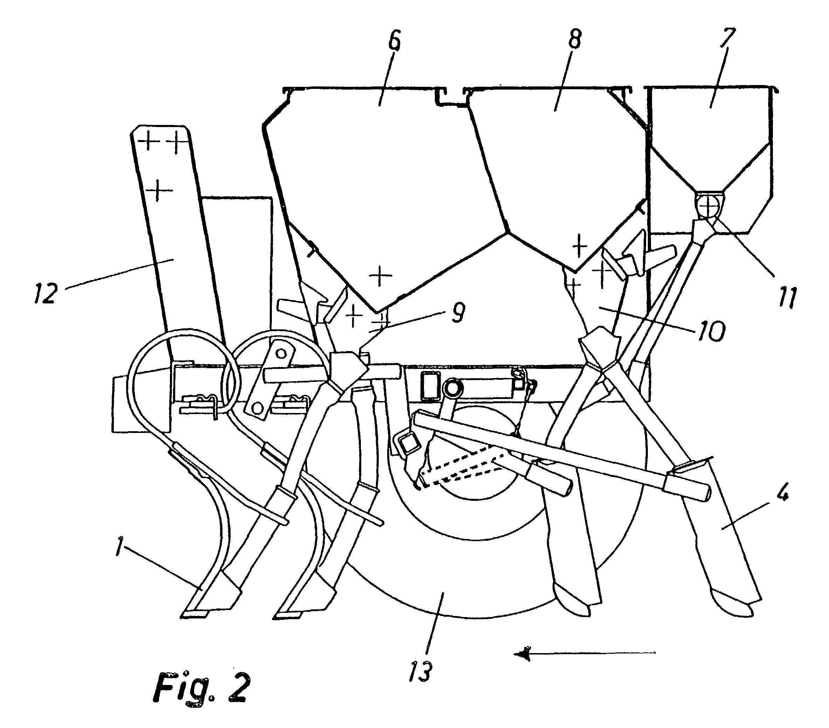

Figure 1 shows the principle of sowing fertilisation. The driving direction of the machine is shown by an arrow. The fertiliser colters 1 open the fertiliser furrows 2 and the seed colters 4 open the seed furrows 3. Figure 2 shows a prior art sowing fertiliser device known per se, in a side view, where the seed colters 4 are fixed to a mounting frame 12 arranged on support wheels 13, whereby the seed colters are connected to a seed reservoir 8, from which the seeds are fed with the aid of a feeder means 10. Also fixed to the frame there is a fertiliser reservoir 6 from which a granular fertiliser is fed to the fertiliser colters 1 with the aid of a feeder means 9.

A reservoir for a granular additional fertiliser is denoted by the reference numeral 7. From the reservoir 7 the additional fertiliser is supplied to the seed colters 4 via a feeder device 11.

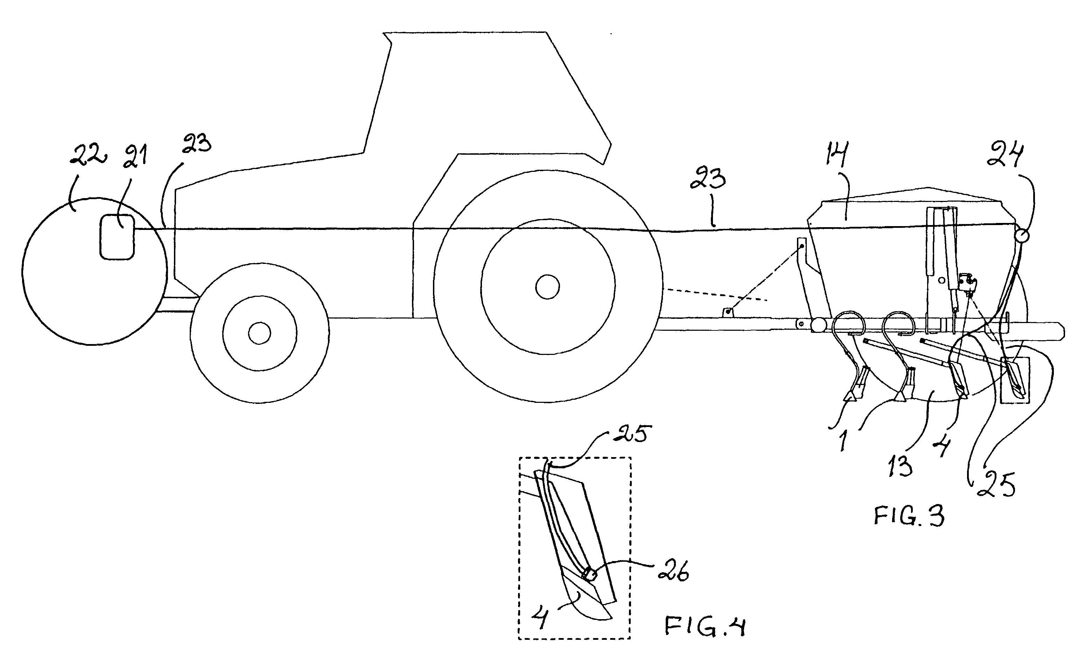

Figure 3 shows a sowing fertilising machine pulled by a tractor, whereby the machine comprises means known per se, in other words supporting wheels 13, seed colters 4, fertiliser colters 1 and a cover 14, under which there are the seed and fertiliser reservoirs with their feeding means. In the sowing fertilising machine according to the figure there is mounted an accessory according to the invention which comprises a liquid reservoir 22 for the water or aqueous compound to be dispensed, a pumping unit 21, dispensing pipes 23 and 25, a manifold 24 for dispensing the water or the aqueous compound to the pipes 25 leading to the individual seed colters 4, and nozzles 26 mounted in connection with the seed colters 4 (figure 4). The nozzle 26 is advantageously of such a type which delivers the water or aqueous compound as a fine mist.

The arrangement according to the invention is described above as combined with a sowing fertilising machine. However, it has to be noted that the method and the device according to the invention do not require the use of a sowing fertilising machine. The invention is as well applicable in a machine with which there is performed only the sowing of seeds. It is evident as well that the arrangement according to the invention can also be realised in a sowing fertilising machine to which there is fixed an accessory according to the Swedish patent 871968-3 dispensing solid fertiliser into the seed colters.

The above mentioned embodiments of the invention are only examples of the implementation of the inventive idea. To a person skilled in the art it is obvious that different embodiments of the invention can vary within the scope of the claims presented below.

## Claims

1. A method intended to be used in sowing for providing the sprouting stimulation required by seeds by directing water or an aqueous compound to the seeds when the seeds are sown into a furrow (3) opened by a seed colter (4), **characterised in that** the guidance of the water or the aqueous compound is made by nozzle spraying at the seed colters, advantageously with the aid of pressure spraying.

2. A method according to claim 1, **characterised in that** the aqueous compound is a nutriment solution or suspension.

3. A method according to claim 1, **characterised in that** the aqueous compound is water, to which is added a gelatinating substance which has formed a gel or which will form a gel.

4. A method according to claim 1, **characterised in that** the aqueous compound is a nutriment solution or suspension, to which is added a gelatinating substance which has formed a gel or which will form a gel.

5. A device for realising the method according to claim 1, whereby the device is intended to be connected to a sowing machine containing seed colters (4) arranged in a frame (12) provided with support wheels (13), whereby the seed colters are connected via a feeder means (10) to a seed reservoir (8), the device comprising a liquid reservoir (22) for water or an aqueous compound to be dispensed, a pumping unit (21), dispensing pipes (23, 25), means (24) for dispensing the water or aqueous compound to the pipes (25) leading to the individual seed colters (4), and nozzles (26) to be mounted in connection with the seed colters, **characterised in that** the nozzles (26) are arranged at the seed colters.

6. A sowing machine containing seed colters (4) arranged in a frame provided with support wheels (13), whereby the seed colters are connected via a feeder means (10) to a seed reservoir (8), a liquid reservoir (22) for water or an aqueous compound to be dispensed, a pumping unit (21), dispensing pipes (23, 25), means (24) for dispensing the water or aqueous compound to the pipes (25) leading to the individual seed colters (4), and nozzles (26) to be mounted in connection with the seed colters, **characterised in that** the nozzles (26) are arranged at the seed colters.

## Patentansprüche

1. Verfahren, das beim Säen eingesetzt werden soll, um die Keimstimulierung bereitzustellen, die von Saatgut benötigt wird, durch Schicken von Wasser oder einer wässrigen Mischung zu dem Saatgut, wenn das Saatgut in eine Furche (3) gesät wird, die von einem Saatgut-Pflugmesser (4) geöffnet wird, **dadurch gekennzeichnet, dass** die Führung des Wassers oder der wässrigen Mischung durch Sprühen aus Düsen an den Saatgut-Pflugmessern erfolgt, vorzugsweise unter zu-Hilfenahme eines Drucksprühens.

2. Verfahren nach Anspruch 1, **dadurch gekennzeichnet, dass** die wässrige Mischung eine Lösung oder Suspension eines Nahrungsmittels ist.

3. Verfahren nach Anspruch 1, **dadurch gekennzeichnet, dass** die wässrige Mischung Wasser ist, dem ein Geliermittel hinzugefügt wird, das ein Gel ausgebildet hat, oder ein Gel ausbilden wird.

4. Verfahren nach Anspruch 1, **dadurch gekennzeichnet, dass** die wässrige Mischung eine Lösung oder Suspension eines Nahrungsmittels ist, welchem ein Geliermittel zugefügt wird, das ein Gel ausgebildet hat, oder ein Gel ausbilden wird.

5. Einrichtung zur Durchführung des Verfahrens nach Patentanspruch 1, wobei die Einrichtung an eine Sämaschine angeschlossen werden soll, welche Saatgut-Pflugmesser (4) aufweist, die in einem Rahmen (12) angeordnet sind, der mit Stützrädern (13) versehen ist, wodurch die Saatgut-Pflugmesser über eine zufuhrvorrichtung (10) an einen Saatgut-Vorratsbehälter (8) angeschlossen sind, und die Einrichtung einen Flüssigkeitsvorratsbehälter (22) für abzugebendes Wasser oder eine wässrige Mischung aufweist, eine Pumpeinheit (21), Verteilungsrohre (23, 25), eine Vorrichtung (24) zum Verteilen des Wassers oder der wässrigen Mischung an die Rohre (25), die zu den einzelnen Saatgut-Pflugmessern (4) führen, sowie Düsen (26), die in Zusammenhang mit den Saatgut-Pflugmessern angebracht werden sollen, **dadurch gekennzeichnet, dass** die Düsen (26) an den Saatgut-Pflugmessern angeordnet sind.

6. Sämaschine, welche Saatgut-Pflugmesser (4) aufweist, die in einem mit Stützrädern (13) versehenen Rahmen angeordnet sind, wobei die Saatgut-Pflugmesser über eine Zufuhrvorrichtung (10) an einen Saatgut-Vorratsbehälter (8) angeschlossen sind, einen Flüssigkeitsvorratsbehälter (22) für zu verteilendes Wasser oder eine wässrige Mischung, eine Pumpeinheit (21), Verteilungsrohre (23, 25), eine Vorrichtung (24) zum Verteilen des Wassers oder der wässrigen Mischung an die Rohre (25), die zu den einzelnen Saatgut-Pflugmessern (4) führen, und Düsen (26), die im Zusammenhang mit den Saatgut-Pflugmessern angebracht werden sollen, **dadurch gekennzeichnet, dass** die Düsen (26) an den Saatgut-Pflugmessern angeordnet sind.

## Revendications

1. Procédé destiné à être utilisé lors du semis pour assurer la stimulation de germination nécessaire aux graines en dirigeant de l'eau ou un composé aqueux vers les graines lorsque les graines sont semées dans un sillon (3) ouvert par un coutre (4), **caractérisé en ce que** le guidage de l'eau ou du composé aqueux est effectué par pulvérisation au pistolet au niveau des coutres, de façon avantageuse à l'aide de la pulvérisation sous pression.

2. Procédé selon la revendication 1, **caractérisé en ce que** le composé aqueux est une solution ou une suspension de nutriments.

3. Procédé selon la revendication 1, **caractérisé en ce que** le composé aqueux est de l'eau, à laquelle est ajoutée une substance gélatineuse qui a formé un gel ou qui formera un gel.

4. Procédé selon la revendication 1, **caractérisé en ce que** le composé aqueux est une solution ou une suspension de nutriments, à laquelle est ajoutée une substance gélatineuse qui a formé un gel ou qui formera un gel.

5. Dispositif pour réaliser le procédé selon la revendication 1, moyennant quoi le dispositif est destiné à être relié à une machine à semer contenant des coutres (4) agencés dans une armature (12) prévue avec des roues de support (13), moyennant quoi les coutres sont reliés par le biais d'un moyen d'alimentation (10) à un réservoir à graines (8), le dispositif comprenant un réservoir à liquide (22) pour l'eau ou le composé aqueux à déverser, une unité de pompage (21), des tuyaux de déversement (23, 25), des moyens (24) pour déverser l'eau ou le composé aqueux dans les tuyaux (25) conduisant aux coutres individuels (4), et des pistolets (26) devant être montés en relation avec les coutres, **caractérisé en ce que** les pistolets (26) sont agencés au niveau des coutres.

6. Machine à semer contenant des coutres (4) agencés dans une armature prévue avec des roues de support (13), moyennant quoi les coutres sont reliés par le biais d'un moyen d'alimentation (10) à un réservoir à graines (8), un réservoir à liquide (22) pour l'eau ou le composé aqueux à déverser, une unité de pompage (21), des tuyaux de déversement (23, 25), des moyens (24) pour déverser l'eau ou le composé aqueux dans les tuyaux (25) conduisant aux coutres individuels (4), et des pistolets (26) devant être montés en relation avec les coutres, **caractérisée en ce que** les pistolets (26) sont agencés au niveau des coutres.
